# EUROPEAN PATENT APPLICATION

(11) **EP 4 369 578 A1**
(43) Date of publication of application: **15.05.2024**
(21) Application number: 22206763.9
(22) Date of filing: 10.11.2022
(51) Int. Cl.: H02M 1/00, H02M 5/458, H02M 1/12

(54) **DC LINK CONVERTER WITH A CONTROLLED RECTIFIER**

(71) Applicant: Xylem Europe GmbH, 8200 Schaffhausen (CH)
(72) Inventor: Fietzek, Reiner, Herford (DE); Althof, Joachim, Vlotho (DE)
(74) Representative: Lenzing Gerber Stute

(57) **Abstract**

Power supply device (1) for a load (2), having a DC link converter with a controlled rectifier (4), as well as a DC link storage device (6), the controlled rectifier (4) being connected to a single-phase or multi-phase network (3) and being controlled in such a way that it takes energy from the mains (3) with a constant charging current (I_grid ) and charges the intermediate circuit storage (6) until a predetermined intermediate circuit voltage (VDC_nom ) is reached, wherein a control device monitors the actual intermediate circuit voltage (VDC_act ) and always grants the load (2) an energy withdrawal from the intermediate circuit storage (6) only when the actual intermediate circuit voltage (VDC_act ) is equal to a predetermined trigger voltage (VDC_trig).

## Description

The present invention relates to a power supply device for a load having a DC link converter with a controlled rectifier and a DC link storage device.

### Prior art

Power supply devices of the type relevant here are widely used in industry, for example but not exclusively in high-power ozone generators. Such high-power ozone generators are used for the disinfection and oxidation of water in industry, in laboratories and in pilot plants. Standard applications include, for example, the treatment of drinking water, industrial water circuits, recycling processes, the food and beverage industry, cooling water systems, fish farming and swimming pools.

In the treatment of water, highly reactive ozone (O₃) is generated by such systems and added to the water to be treated. Due to its strong oxidative effect, ozone reacts with impurities, bacteria, fats, algae and other undesirable water components and can decompose them in the process.

Ozone is generated within the ozone generators by means of intermittent, repetitive pulses of high energy, which break down the oxygen O₂ molecules supplied to atomic oxygen (O), which then react with other O₂ molecules to form ozone (O₃). To provide the necessary energy pulses, grid-connected inverters with DC link capacitors are used between the load and the supply grid.

For example, a grid-connected inverter for transferring power between a power source and a fluctuating load is known from US 8,796,884 B2.

From US 2014/0028249 A1 a control strategy for charging pulse battery systems with an inverter and a DC link capacitor is known.

The usual mode of operation of grid-connected inverters is that they generate a constant voltage in their internal DC link capacitors. Such inverters are also called VSI (Voltage Source Inverter). This mode of operation is well known and is well suited for loads with very low or non-recurring load fluctuations.

When using conventional VSIs, however, there is basically the problem that load-side fluctuations become directly noticeable in a relative fluctuation of the power consumption from the grid. A problem arises in particular when these load fluctuations are periodically recurring. In the event that the load fluctuations occur at a frequency that lies in the range of the fundamental network frequency or a harmonic thereof, this can lead to undesirable so-called total harmonic distortion (THD).

Pulsed operation of ozone systems generally results in a periodic sequence of energy pulses on the load side. While each energy pulse consumes the same amount of energy, the average value of the total power is determined by the pulse frequency (number of pulses per time unit). As described above, when a VSI is loaded in this manner, the load-side energy pulses are directly visible on the grid-side lines. This can cause undesirable strong distortions of the current fed from the grid, especially in case of exact overlap of the occurring current peaks, since the VSI compensates the energy loss from the DC link immediately after each load pulse.

In the case of known ozone generators, a complicating factor is that the time constant of each pulse in normal operation is only a fraction of a period of the power frequency. In addition, the frequency at which the energy pulses occur may be equal to the mains frequency or an exact multiple thereof. The occurrence of the resulting distortion is often unpredictable to a user, since the total power of the ozone system is adjusted by the pulse frequency. The pulse frequency used therefore depends on the desired total power and has a direct effect on the course of the supply current on the mains side.

### Object of the invention

The object of the present invention is to provide a power supply in which the above problems do not occur.

### Solution

This object is achieved by a power supply device having the features of claim 1. Advantageous embodiments are the subject of the subclaims.

For this purpose, the power supply device according to the invention has a DC link converter with a controlled rectifier as well as a DC link storage device, the controlled rectifier being connected to a single-phase or multi-phase mains and being controlled in such a way that it takes energy from the mains with a constant charging current and charges the DC link storage until a predetermined DC link voltage is reached, wherein a control device monitors the actual DC link voltage and always grants the load an energy withdrawal from the DC link storage only when the actual DC link voltage is equal to a predetermined trigger voltage.

Such a power supply device enables operation in which a constant current from the grid-side lines is preferred over a constant voltage in the DC link. This is made possible by a logical coupling between the grid-side controlled rectifier and the load-side inverter, and by accepting a significant ripple or voltage drop at the DC link storage, for example in the form of a capacitor, which has not been accepted in conventional VSI systems.

During operation of the power supply device according to the invention, the DC link converter emits an energy pulse to the load in a first step on the load side. After each energy pulse, the voltage at the DC link storage thereby drops significantly. This energy loss is then compensated by a constant current from the mains until the energy loss of the DC link is sufficiently compensated. Only then is the next load-side energy pulse delivered.

This operating mode ensures that a constant current is always taken from the mains, which recharges the DC link storage after each discharge, i.e. after each energy pulse delivered. In this case, the current is a function of a power setpoint desired and specified by the user. The load-side pulse frequency depends on the current with which the DC link storage is recharged. A higher current leads to faster charging and thus to a higher load-side pulse frequency.

Since the grid-side charging current with which the DC link storage is charged is controlled to a constant value by the control device or by the user, the pulse frequency of the load-side energy pulses no longer has any influence on the shape of the grid-side current flow. With the power supply according to the invention, undesirable total harmonic distortions in the current flow (THDi) therefore no longer occur.

The next load-side energy pulse is only triggered when the voltage at the DC link capacitor reaches a value to be defined, the so-called trigger voltage, which is selected so that it is below the nominal DC link voltage. For this purpose, the control device monitors the actual DC link voltage at all times. Above this trigger voltage level, the control device successively reduces the current until the nominal DC link voltage is reached. This is a cascaded voltage and current control with constant current or voltage limitation (CC/CV). This ensures that the power supply device is operated either with constant input current (CC, in production mode) or with constant DC link voltage (CV, in no-load operation).

### Preferred embodiments

In a preferred embodiment, the control device also controls the controlled rectifier.

In a particularly preferred embodiment, the control device regulates or adjusts the charging current so that the DC link storage unit is recharged to the specified DC link voltage within a specified time period. Thus, the control device can be used to adjust the duration between two energy pulses on the load side and thus the effective total power output of the system.

In a further embodiment, the control device terminates the charging process of the DC link storage as soon as it receives a signal from a controller or a user that energy is no longer being drawn from the DC link storage. Thus, the control device can be switched to an idle mode in which the DC link is no longer charged.

### Drawings

The invention is explained in more detail below with reference to figures, the figures serving merely to provide a better understanding of the principle of the invention and the invention not being limited to the embodiment shown.

They show:
- Figure 1:: A schematic representation of an embodiment of a power supply device according to the invention;
- Figure 2:: An overview of the control operation of a control device of this power supply unit;
- Figure 3a:: The U/I characteristics of a conventional prior art VSI; and
- Figure 3b:: The exemplary U/I characteristics of a power supply device according to the invention.

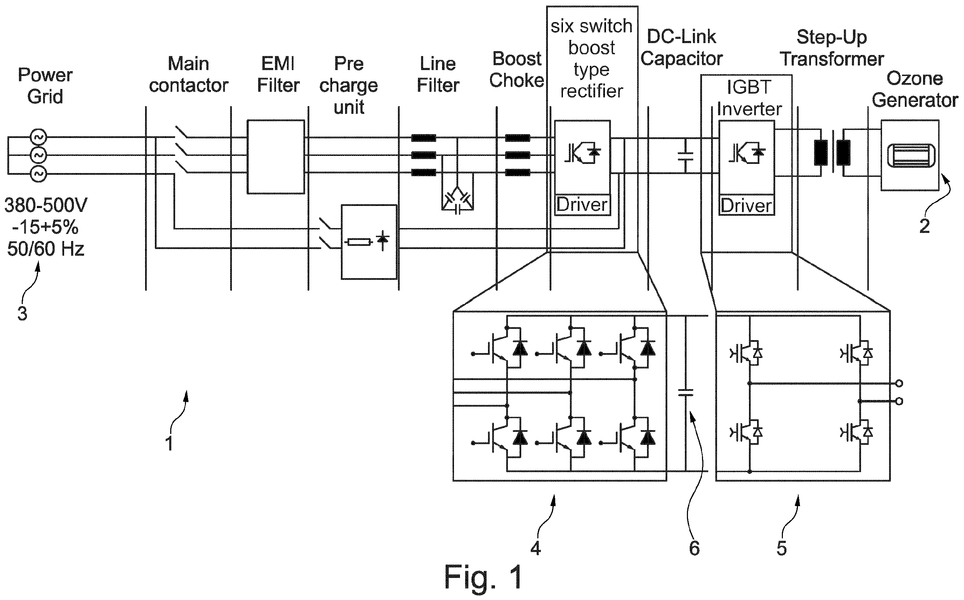

Figure 1 shows a schematic overview of an embodiment of the invention. The power supply device 1 has a DC link converter between a three-phase power grid 3 and a load 2 in the form of an ozone generator. On the mains side, the DC link converter has a controlled rectifier 4 and on the load side, an inverter 5. The DC link converter also has a DC link storage device 6 in the form of a capacitor.

According to the invention, the rectifier 4 is controlled in such a way that it draws an adjustable constant charging current I_grid from the mains grid 3 and thereby charges the DC link storage 6 until it reaches a predetermined DC link voltage VDC_nom. The actual DC link voltage VDC_act is continuously monitored by a control device during the charging process. As soon as the actual DC link voltage reaches the value of a predetermined trigger voltage VDC_trig, the control device grants the load 2 an energy withdrawal from the DC link storage 6 and thus a load-side energy pulse is delivered. Subsequently, a new energy output is only possible when the DC link storage 6 is charged again or when the actual voltage VDC_act has reached the value of the specified trigger voltage VDC_trig again.

In this way, the intermediate storage 6 is constantly charged, resulting in a constant charging current I_grid. This charging current remains constant even when energy is drawn from the DC link storage 6, because the trigger voltage VDC_trig is smaller than the specified DC link voltage VDC_nom, energy is already drawn from the DC link storage 6 before the controlled rectifier 4 would reduce the charging current by reaching VDC_nom.

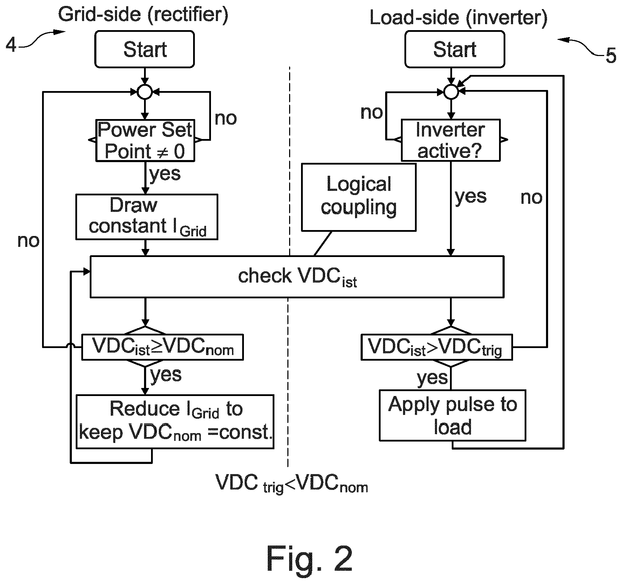

For a better understanding, Figure 2 shows the exact sequence of the control operation of the control device of the power supply unit 1. On the left side of the figure, the control operation of the controlled rectifier 4 is shown. On the right side of the figure the control operation of the load side inverter 5 is shown. The two sides are logically coupled by the function shown in the center of the figure in that the arrangement on both the grid side and the load side depends directly on the monitored actual DC link voltage VDC_act of the DC link storage 6.

The sequence of control operation of the controlled rectifier 4 shown in Figure 2 on the left begins by checking whether the operating point of the charging current I_grid set by the user is not zero. In other words, whether the user has put the power supply device 1 into operation. If this is the case, the controlled rectifier draws a constant charging current I_grid equal to the set operating point from the power supply system and thus charges the DC link storage device 6, continuously monitoring the actual DC link voltage VDC_act. If the voltage level of the actual DC link voltage VDC_act reaches or exceeds the value of a specified DC link voltage VDC_nom, the charging current I_grid is reduced to keep the specified DC link voltage VDC_nom constant at the specified value. However, this scenario does not occur during normal operation due to the aforementioned logical coupling.

The control operation sequence of the load-side inverter shown in Figure 2 on the right also checks the actual DC link voltage VDC_act. If the actual DC link voltage VDC_act exceeds the value of the specified trigger voltage VDC_trig, which is below the specified DC link voltage VDC_nom, then an energy pulse is delivered to the load. If the actual DC link voltage VDC_act is below the specified trigger voltage VDC_trig, the inverter waits and the DC link storage 6 continues to be charged.

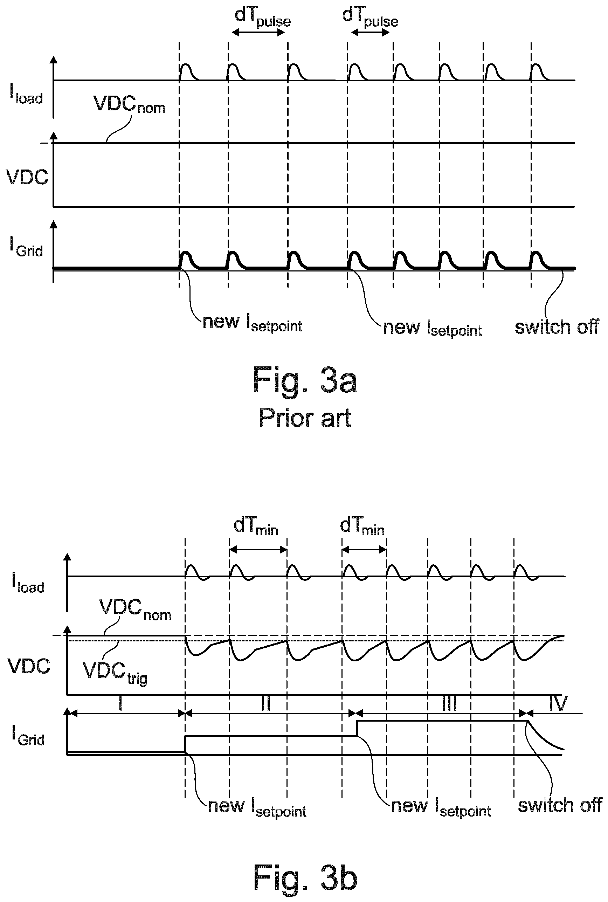

Figures 3a and 3b compare, by way of example, the U/I (voltage and current) characteristics of a conventional VSI and a power supply device 1 according to the invention.

Figure 3a shows the U/I characteristics of a conventional VSI according to the prior art. The lower line shows the curve of the supply current I_grid on the grid side, while the upper line shows the curve of the load current I_load delivered to the load. The actual DC link voltage corresponds to the nominal voltage VDC_nom of the DC link and is constant throughout, since the supply-side charging current I_grid immediately replenishes the energy delivered to the load. As a result, current peaks occur at the same points, which are marked by vertical dashed lines, for each energy pulse in both characteristic curves I_grid, I_load, whose spacing corresponds to the time interval dT_pulse between two load-side energy pulses. The load-side energy pulses are mapped, so to speak, in the grid-side supply current. As already explained, this is particularly disadvantageous if the interval between two energy pulses dT_pulse corresponds to the interval of the mains voltage or the tapping takes place at a frequency corresponding to an integer multiple of the mains frequency.

In contrast, Figure 3b shows the U/I characteristics of a device according to the invention. In this case, the grid-side charging current I_grid is constant in sections I, II and III, while the actual DC link voltage shows dips at the points of the load-side energy pulses. In section I, the device is switched off and the charging current I_grid is consequently constantly zero. If the user increases the operating point of the charging current I_grid to a non-zero value and the first energy pulse is delivered on the load side (section II), the actual DC link voltage VDC_act drops below the value of the DC link voltage VDC_nom and below the value of the trigger voltage VDC_trig. Immediately, the DC link storage is charged by the constant charging current I_grid. As soon as the actual DC link voltage reaches the value of the set trigger voltage VDC_trig, another load-side energy pulse is emitted so that the actual DC link voltage VDC_act drops again. This process repeats until the user turns off the device (Section IV) or changes the operating point of the charging current I_grid (Section III). By adjusting the operating point of the charging current I_grid, the time period dT_min, until the DC link storage is charged, and thus the interval between two load-side energy pulses, is varied. Thus, ultimately, the total energy output can be set via the charging current I_grid, whereby the charging current I_grid is set constant in each case without the resulting pulse frequency having any effect on the course of the mains current.

### Reference sign

- 1: Power supply device
- 2: Load/ozone generator
- 3: Power grid
- 4: Rectifier on grid side
- 5: Load side inverter
- 6: DC link storage
- I_grid: Charging current
- VDC_nom: Nominal or specified DC link voltage
- VDC_act: Actual DC link voltage
- VDC_trig: Trigger voltage
- dT_min: Time period until charging of the DC link storage
- dT_pulse: Time interval between two load-side energy pulses

## Claims

1. Power supply device (1) for a load (2), having a DC link converter with a controlled rectifier (4), and a DC link storage device (6), the controlled rectifier (4) being connected to a single-phase or multi-phase mains grid (3) and being controlled in such a way that it draws energy from the grid (3) with a constant load current (I_grid ) and charges the DC link storage device (6), until a predetermined intermediate circuit voltage (VDC_nom ) is reached, wherein a control device monitors the actual intermediate circuit voltage (VDC_act ) and always grants the load (2) an energy withdrawal from the intermediate circuit storage (6) only when the actual intermediate circuit voltage (VDC_act ) is equal to or greater than a predetermined trigger voltage (VDC_trig).

2. Power supply device (1) according to claim 1, **characterized in that** the control device also controls the controlled rectifier (4).

3. Power supply device (1) according to claim 1 or 2, **characterized in that** the control device adjusts or sets the the charging current (I_grid ) so that the DC link storage (6) is recharged to the predetermined DC link voltage (VDC_trig ) within a predetermined time duration (dT_min ).

4. Power supply device (1) according to one of claims 1 to 3, is **characterized in that** the control device terminates the charging process of the DC link storage (6) as soon as it receives a signal from a controller or a load that power is no longer being drawn from the DC link storage (6).
